# EUROPEAN PATENT SPECIFICATION

(11) **EP 3 111 340 B1**
(45) Date of publication and mention of the grant of the patent: **27.03.2024**
(21) Application number: 15707124.2
(22) Date of filing: 26.02.2015
(51) Int. Cl.: G06F 16/90

(54) **LINKING OBJECTS IN DATABASES**
OBJEKTVERKNÜPFUNG IN DATENBANKEN
LIAISON D'OBJETS DANS DES BASES DE DONNÉES

(30) Priority: 28.02.2014 EP 14157283
(43) Date of publication of application: 04.01.2017
(73) Proprietor: Aveva Solutions Limited, Cambridge, Cambridgeshire CB3 0HB (GB)
(72) Inventor: CAMPBELL, Peter, Cambridge Cambridgeshire CB4 1NZ (GB)
(74) Representative: Piotrowicz, Pawel Jan Andrzej
(86) International application number: PCT/EP2015/054098
(87) International publication number: WO 2015/128443

(56) References cited:
- US-A- 6 003 040
- US-A- 6 016 498
- US-A1- 2005 246 205
- US-A1- 2008 307 010
- James Cooper: "Database Design and SQL for DB2", , 1 January 2013 (2013-01-01), pages 15-48, XP055627631, Retrieved from the Internet: URL:https://www.amazon.com/Database-Design -SQL-James-Cooper/dp/1583473572 [retrieved on 2019-10-01]

## Description

### Field of the Invention

The present invention relates to linking objects in databases.

### Background

Engineering software can be used to design and implement complex installations, structures, vessels and platforms, such as process and power plants, and biofuel production plants, ships, and oil and gas platforms. Engineering software can be used not only to create and view project designs, but also to manage engineering projects.

Databases are used to store a design which can be created, modified and viewed by one or more users using a variety of software applications (herein referred to as "project tools").

Designs tend to develop incrementally and to involve multiple users sharing data. This can create a number of challenges. For example, a part of design being used or relied on by one user may be modified or deleted by another user. Conversely, a user which cannot modify part of the design may wish to ensure that other users are aware of, or can view, another related part of the design that they have created, modified or deleted.

US 2005 246205 A1 describes systems and methods for constructing a regional medical data exchange infrastructure that can provide the aggregation and presentation of personal health data that previously exists in different health care organizations in a segmented fashion. More particularly, the present invention relates to systems and methods for establishing a regional medical data exchange infrastructure, identifying patients across multiple different organizations, creating patient medical data pointers and routing tables, and generating comprehensive medical data sets for an enrolled population. One feature of this present invention permits the regional medical data exchange infrastructure to be built without any protected health information (PHI) being stored in any centralized databases. Another feature of the present invention permits the continuous operation of the regional medical data exchange infrastructure even when the centralized facility experiences downtime. Exemplary embodiments of the present invention permit both local and global logging and tracking of data flows and user activities to satisfy HIPAA compliances. Alternative embodiments of the present invention permit the preservation of the data ownership for the participating organizations.

Database Design and SQL for DB2 by James Cooper, 1 January 2013 describes and introduction to database design.

### Summary

The invention is set out in the appended claims.

### Brief Description of the Drawings

Certain embodiments of the present invention will now be described, by way of example, with reference to the accompanying drawings, in which:
Figure 1 is a schematic block diagram of a project database system which includes a multiple database and workstations;
Figure 2 is a schematic block diagram of a database included in the multiple database shown in Figure 1;
Figure 3 is a schematic block diagram of an object which includes a set of attributes;
Figure 4 illustrates a simple collaborative design process;
Figure 5 illustrates a user that has different access rights to different databases;
Figure 6 is a schematic block diagram of an object and a database engine;
Figure 7 is a schematic block diagram of first and second objects, a pointer and a pseudo pointer;
Figure 8 is a process flow diagram of method of creating a link between first and second objects;
Figure 9 illustrates a database engine receiving instructions to link first and second objects;
Figure 10 illustrates a database engine adding, to a second object, a pointer to a first object;
Figure 11 illustrates a database engine adding an entry in a look up table which can be identified by a table identifier in a first object;
Figure 12 illustrates the look up table shown in Figure 11;
Figure 13 is a process flow diagram of method of establishing, by querying a first object, that the first object is linked to a second object;
Figure 14 illustrates a database engine establishing, by querying a first object, that the first object is linked to a second object;
Figure 15 illustrates linking objects in a database to a look table in the same database;
Figure 16 is a schematic block diagram of a computer system which can be used to implement a workstation as shown in Figure 1.

### Detailed Description of Certain Embodiments

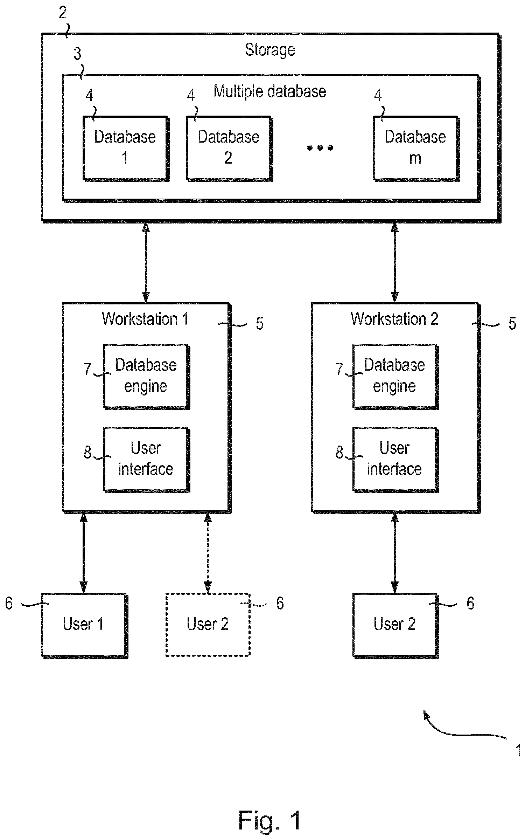

Referring to Figure 1, a project database system 1 is shown.

The system 1 includes storage 2 holding a multiple database 3 which includes a group of linked databases 4. The system 1 also includes a set of workstations 5 which allow users 6 to access the databases 4. Each workstation 5 includes a database engine 7 for navigating and accessing data in the databases 4 and a user interface 8.

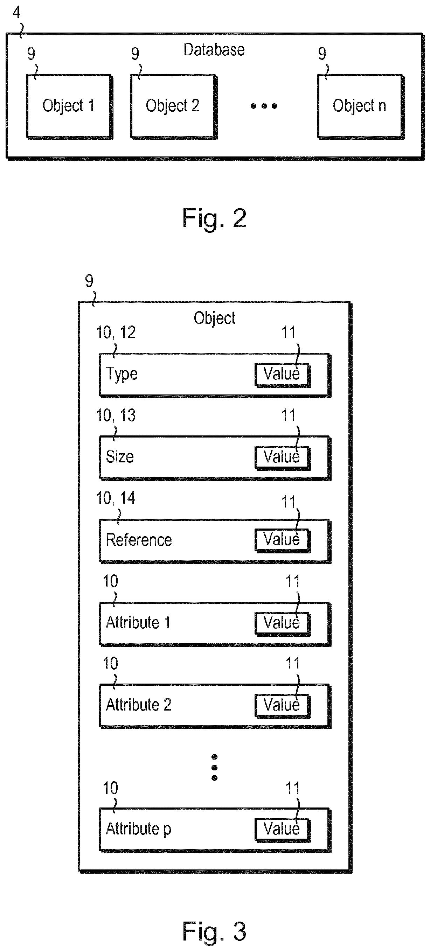

Referring also to Figures 2 and 3, each database 4 includes a set of discrete items 9 of data which are herein referred to as "elements" or "objects". An element 9 may relate to an engineering part or item, such as frame, piece of equipment, pipe or pipe. Each element 9 includes a set of attributes 10 defined and arranged according to a given schema. Each attribute 10 may contain a value 11 which can include text and/or numbers. Each attribute 10 defines a property of the element 9. A property may be, for example, a part name, a set of geometric dimensions (e.g. height, diameter, etc.), a respective value for each geometric dimension, a respective unit of measurement for each geometric dimension, part status (e.g. in stock, installed etc.), material type (e.g. stainless steel) and/or other relevant part information. Each element 9 can occupy a fixed page size, for example, 2 kB. The databases 4 and/or elements 9 contained in a database 4 are preferably arranged hierarchically. The databases 4 are not relational databases.

Each element 9 includes an attribute 12 which indicates an object type. An object type takes the form of an n-bit number (for example, *n* = 32). However, for simplicity, the object type is labelled herein using a letter, such as, "X" or "Y". Each element 9 includes an attribute 13 which indicates an object size (that is, memory occupied by the element 9). The object type 10 and object size 11 are preferably stored at the beginning of the element 9.

Each element 9 is identifiable by a reference attribute 14 and, optionally, a name (not shown). The reference 14 takes the form of an m-bit number (for example, *m* = 32). However, for simplicity, the reference is labelled herein using a simple code, such as "111/222" or "333/444" or by a descriptive name, such as "Object 1" or "Object 2".

The multiple database 3 is a distributed database system. Each element 9 is stored only once in one database 4 and is not stored in another database 9 in the multiple database 3. A central database is not used to aggregate all elements in a single database. Furthermore, a global indexing arrangement need not be used.

Different users 6 can work concurrently on different aspects of a project design. For example, a structural engineer can work on structural aspects of the design, while a piping engineer can work on pipework aspects. Furthermore, more than one user 6 may work on different parts of one aspect of the design, such as pipework. Thus, different parts and/or aspects of a design may be created, modified and/or deleted at or around the same time.

Different users 6 can have different access rights (herein also referred to as "permissions") to the databases 4. A user 6 can, among other things, view, create, modify and/or delete data held in a database 4. However, a user 6 may have unlimited (or relatively unlimited) access rights including, for example write and modify rights, to one or more databases 4 (or one or more parts of one or more databases 4), and limited (or relatively limited) access rights, not including write and modify rights, to one or more other databases 4 (or one or more parts of one or more databases 4).

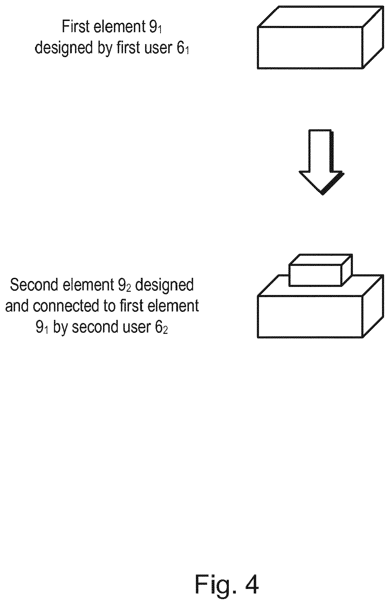

Referring also to Figure 4, the partitioned nature of project design can lead to a situation in which one user creates, modifies or deletes a part of the design which is linked to another part of the design (herein referred to as a "protected part of the design") that he or she does not have permission to modify. A first user 6₁ may create a first element 9₁ and a second user 6₂ may create a second element 9₂ which is linked to the first element. However, the second user 6₂ may not have permission to update the attributes 10 of the first element 9₁ in order to show that the second element 9₂ is linked to the first element 9₁ or to provide information about the nature of the link. For example, a piping engineer may connect a pipe to a vessel which has been designed or specified by another engineer. However, the piping engineer may not have permission to update the vessel design to show that the pipe is connected to the vessel or to provide information about the point of connection.

To help to try to ameliorate this drawback, each database engine 7 is each configured to allow a user 6 to link his or her element 9₂ to a protected element 9₁ by providing what appears to be a pointer (herein referred to as a "back pointer", "pseudo pointer" or "virtual pointer") from the protected element 9₁ to his or her element 9₂ without actually adding or modifying attributes 10 in the protected element 9₁.

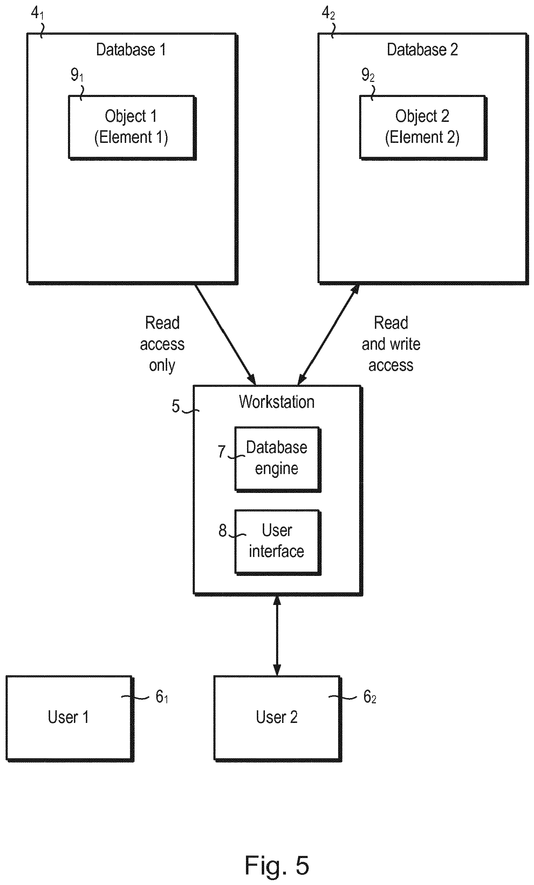

Referring to Figure 5, first and second databases 4₁, 4₂ are shown.

The first database 4₁ includes a first object 9₁ created by a first user 6₁.

A database engine 7, under the control of the second user 6₂, has read-only access to the first database 4₁ and has read and write access to the second database 4₂.

The second user 6₂ uses the database engine 7 to create or modify a second object 9₂ in the second database 4₂.

The databases 4₁, 4₂ are distributed and store different objects 9₁, 9₂ for different users 6₁, 6₂. Thus, the first object 9₁ is stored in the first database 4₁, but not in the second database 4₂ and the second object 9₂ is stored in the second database 4₂, but not in the second database 4₂.

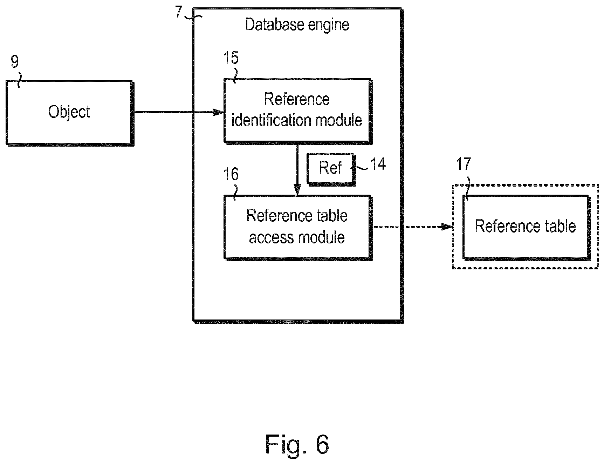

Referring to Figure 6, the database engine 7 includes a first module 15 which is able to identify the reference 14 of a given object 9 and a second module 16 which is able to search reference tables 17 stored in the databases 4 for a reference table 17 which contains pointer information for the given object 9. The second module 16 is able to look up the given object 9 in a reference table 17, i.e. the reference table 17 which contains pointer information for the identified type of object, and present the result as a pseudo attribute.

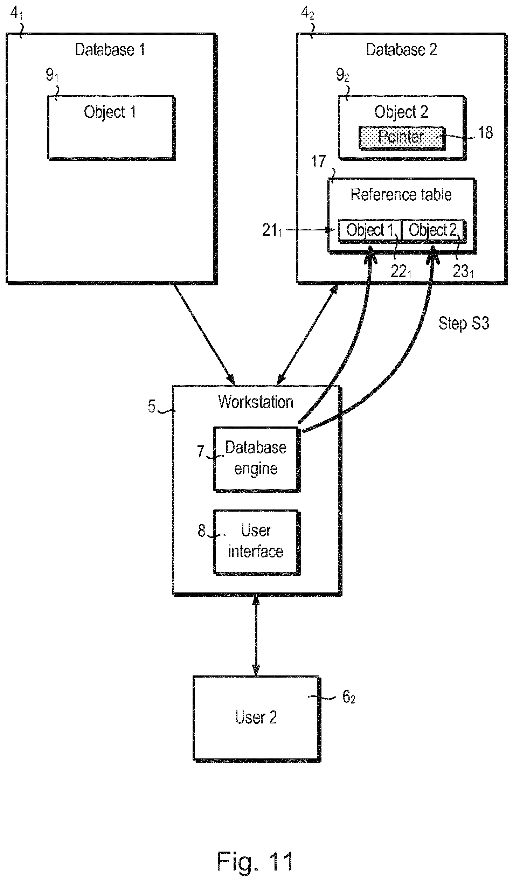

The database engine 7 is able to determine whether an object 9 has a back pointer using the reference table 17 which contains pointer information for objects of type X. A reference table 17 can also contain pointer information for objects of other, different types. Each database 4 can have its own respective reference table 17 which contains pointer information for objects of type X. In this case, a reference table 17 which contains pointer information for the second object 9₂ is stored in the second database 4₂ (Figure 11).

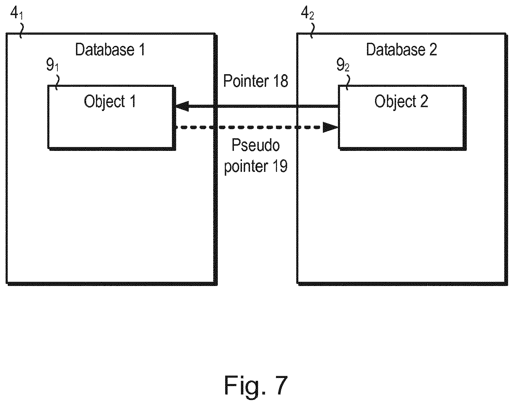

Referring also to Figure 7, the database engine 7 is able to create a real pointer 18 from the second object 9₂ to the first object 9₁. Furthermore, even though the second user 6₂ does not have permission to modify the first object 9₁, the database engine 7 can create a pseudo pointer 19 from the first object 9₁ to the second object 9₂.

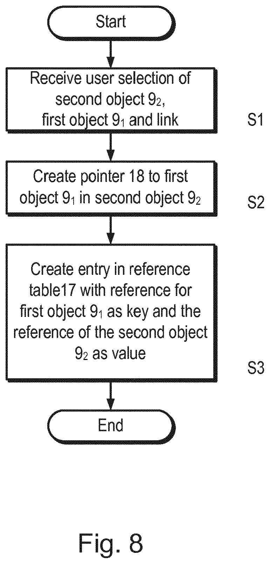

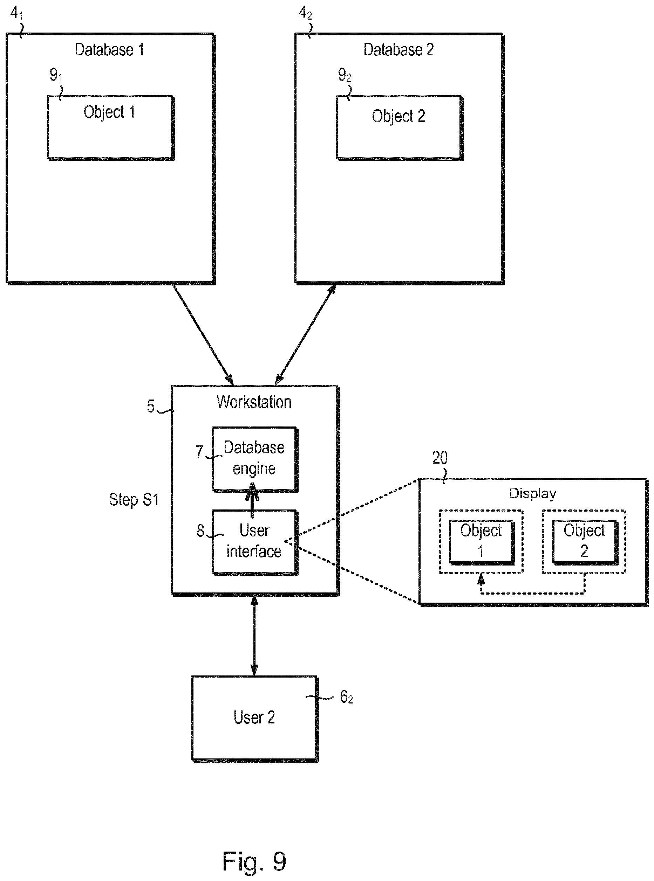

Referring to Figure 8 and to Figures 9 to 12, a process of linking the first and second objects 9₁, 9₂ will now be described.

The second user 6₂ creates or modifies a second object 9₂ and links it to the first object 9₁ using the user interface 8. The user 6₂ may view representations of the first and second object 9₁, 9₂ on display 20.

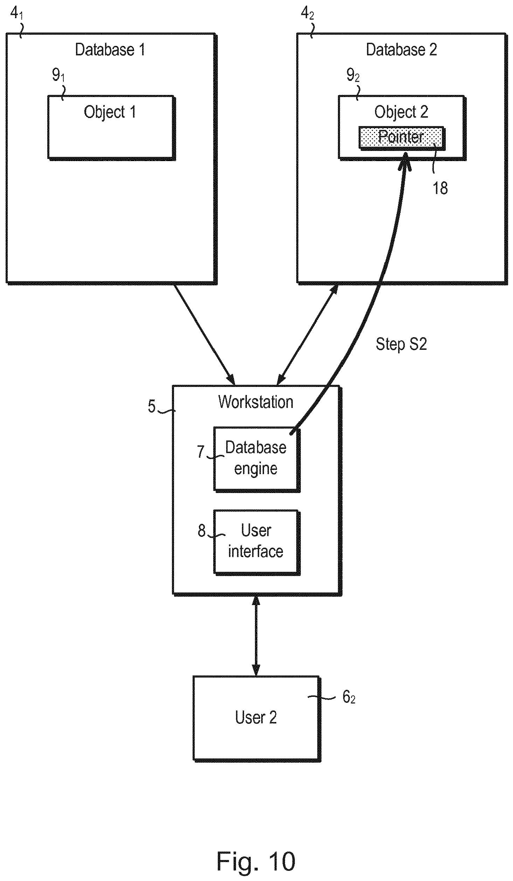

The selection of the second object 9₂ and the first object 9₁ is received by the database engine 7 (step S1) which adds, to the second object 9₂, a pointer 18 to the first object 9₁ (step S2). In particular, the database engine 7 sets the value 11 (Figure 2) of an attribute 10 (Figure 10) in the second object 9₂ to be the reference (for example, in the form of a 32-bit number) for the second object 9₂. The database engine 7 creates an entry 21₁ in the look up table 17 in the second database 4₂ which identifies the first object 9₁ and the second object 9₂ (step S3). In particular, the entry 21₁ includes the references for the first and second objects 9₁, 9₂. The entry 21₁ is indexed using the first object 9₁.

The first object 9₁ is not copied to the second database 4₂. Furthermore, the first database 4₁ is not written to or modified. Thus, only the second database 4₂ is updated. The first object 9₁ is not copied to any other database 4, such as a central database, and other databases are not written to or modified.

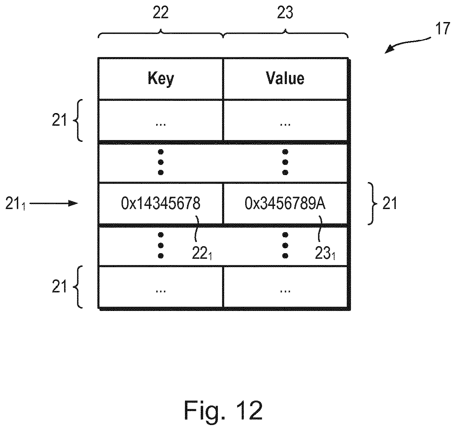

Referring to Figure 12, the look up table 17 is shown in more detail.

The table 17 contains one or more key/value pairs 21 comprising a key 22 and a value 23. The key 22 consists of the identifier (for example, a 32-bit address) of the object 9 being point to. Thus, in this case, the key 22₁ consists of the identifier of the first object 9₁. The value 23 consists of the identifier (for example, a 32-bit address) of the object 9 with the real pointer. Thus, in this case, the value 23₁ consists of the identifier of the second object 9₂. The table will contain all such settings for that database.

The table 17 is ordered by the identity of objects 9 being pointed to. Thus, given the identity of an object, in this case the identity of the first object 9₁, the entry 21₁ can be quickly found.

The second object 9₂ is now linked to the first object 9₁. The link is bi-directional. Thus, if the database engine 7 queries the second object 9₂, then the pointer 18 will indicate a link with the first object 9₁ and so the database engine 7 can query and/or retrieve the first object 9₁. Furthermore, if the database engine 7 queries the first object 9₁, the pseudo pointer 19 will indicate a link with the second object 9₂ and so the database engine 7 can query and/or retrieve the first object 9₂. The database engine 7 can do this despite the fact that the first object 9₁ has not been updated or modified.

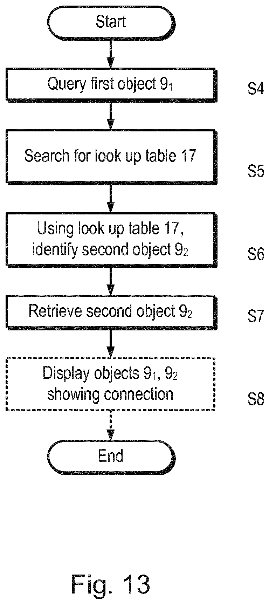

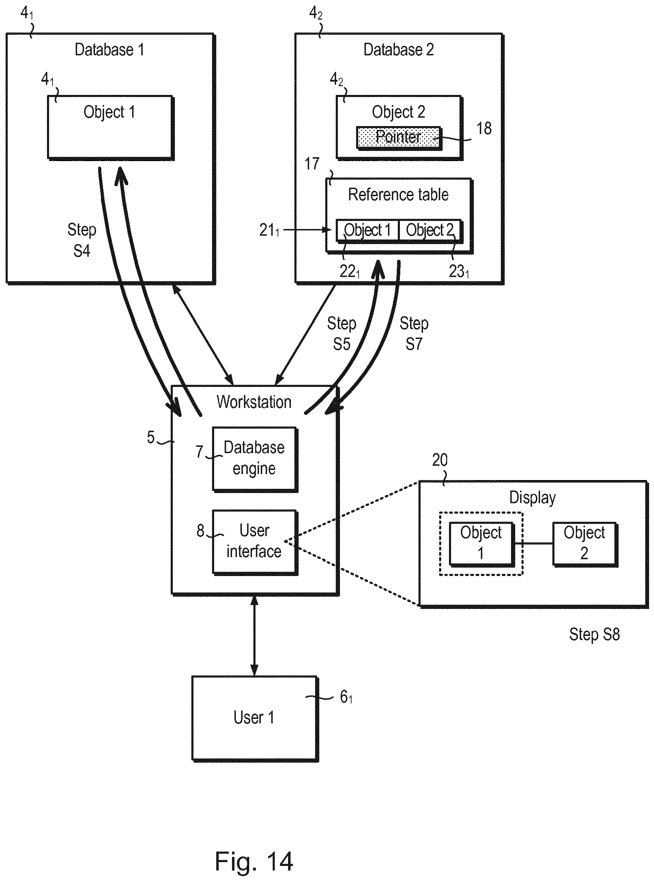

Referring to Figure 9 and to Figures 13 and 14, a process of querying the first object 9₁ will now be described. In this case, the first user 6₁ conducts the query using the workstation 5. However, any user, including the second user 6₂, using any other workstation 5 connected to the databases 4 could conduct the query.

The database engine 7 queries the first object 9₁ and returns its attributes (step S4). The database engine 7 searches the databases 4 (Figure 1) for look up tables 17 using the reference 14 (Figure 3) of the first object 9₁ (step S5). The database engine 7 searches all the databases 4 for a connection to the first object 9₁. For example, the database engine 7 searches the reference table 17 in the second database 4₂. If there are no entries for the first object 9₁ in the in the second database 4₂, then there is no pseudo pointer for objects 9 stored in the second database 4₂. However, if there is an entry 21₁ corresponding to the first object 9₁, then the database engine 7 identifies and retrieves the second object 9₂ (step S7). This can be achieved by extracting the reference 14 (Figure 3) of the second object 9₂. The database engine 7 can display the first and second objects 9₁, 9₂ on display 20 showing the connection (step S8).

Thus, even though the second user 6₂ has not modified the first object 9₁, he or she is still able to create a pseudo pointer 19 (Figure 7) which tells other users that the second object 9₂ is connected to the first object 9₁.

The database engine 7 can search reference tables 17 for objects 9 of a certain type (such as type X) rather than searching reference tables 17 for all object types.

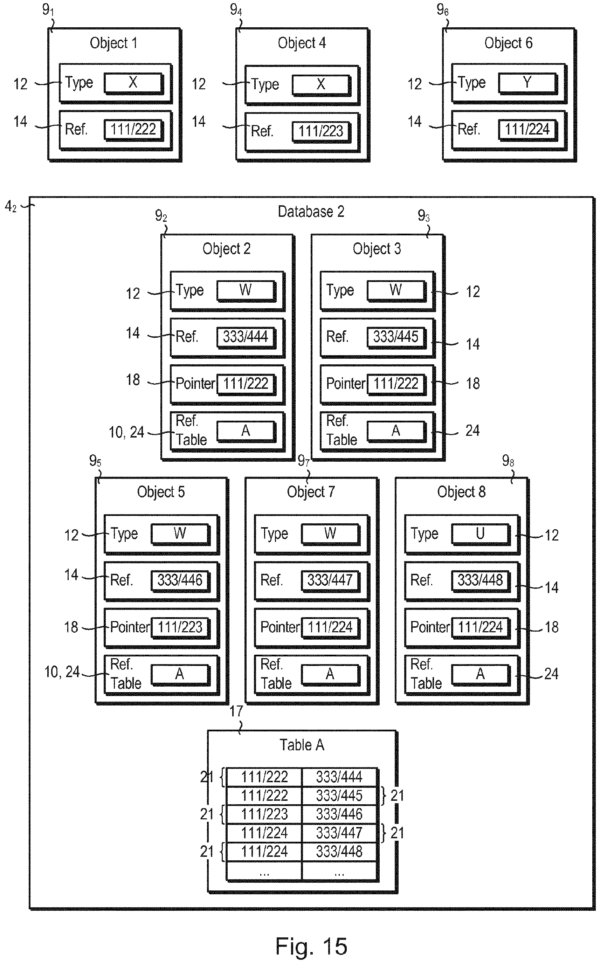

Referring to Figure 15, the second object 9₂ is linked to the reference table 17 using an attribute 24 which identifies, for example points to, the reference table 17. The reference table identifier attribute 24 (or "reference table identifier") takes the form of a p-bit number (for example, *p* = 32). However, for simplicity, the reference table identifier 24 is labelled herein using a letter, such as, "A".

The reference table 17 can be shared by more than one object 9 (Figure 2) in the same database 4 (Figure 2). Furthermore, the reference table 17 may contain objects 9 of different types.

For example, the multiple database 3 (Figure 1) may hold first, second, third, fourth, fifth, sixth, seventh and eighth objects 9₁, 9₂, 9₃, 9₄, 9₅, 9₆, 9₇, 9s. The second, third, fifth, seventh and eighth objects 9₂, 9₃, 9₅, 9₇, 9₈ are stored in the second database 4₂. The fourth and sixth objects 9₄, 9₆ may be, but need not be, stored in the first database 41.

The third, fourth, fifth, seventh and eighth objects 9₃, 9₄, 9₅, 9₇, 9₈ each include a reference table identifier 24 containing a value, in this case "A", which points to the reference table 17.

The reference table 17 can be used to link objects 9₃, 9₄, 9₅, 9₇, 9₈ in the second database 4₂ to other objects 9₁, 9₄, 9₆ which may be of different types, for example object type X and object type Y. The other objects 9₁, 9₄, 9₆ may be stored in any database.

The reference table identifier 24 is fixed for a given attribute and object type. A link to the reference table 17 is defined in a database schema and the link is defined in the schema such that setting the pointer 18 triggers updating of the reference table 17. It will be appreciated that more or fewer objects may be stored in the multiple database 3, that other identifiers can be used and that the objects can be linked differently. Each database 4 (Figure 1) can include one or more look up tables 17. For example, the first database 4₁ (Figure 5) may include a look up table 17. Such a look up table 17 can allow the first user 6₁ (Figure 5) to modify the first object 9₁ by linking it with another object 9. It can even allow the first user 6₁ (Figure 5) to modify the first object 9₁ by linking it with the second object 9₂ independent of any existing link made by the second user 6₂ (Figure 5).

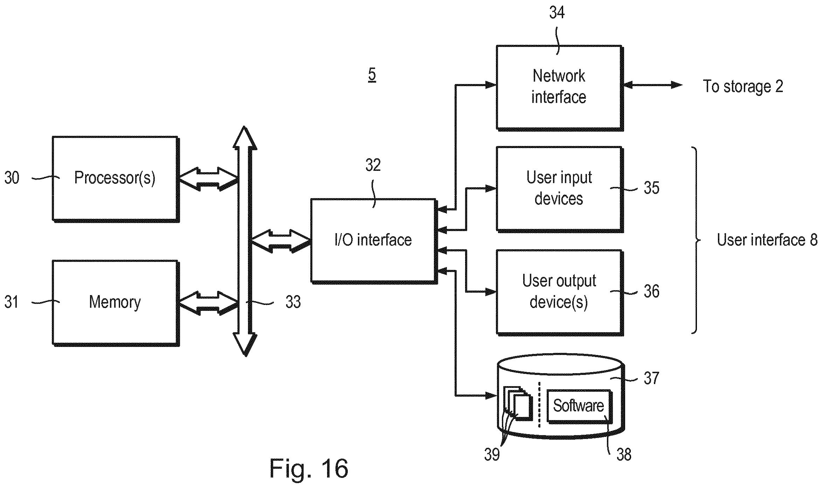

Referring to Figure 16, each workstation 5 takes the form of a computer system which includes one or more processors 30, memory 31 and an input/output (I/O) interface 32 operatively connected by a bus 33. The I/O interface 32 is operatively connected to a network interface 34, user input devices 35 (such as a keyboard and mouse) and user output device(s) 36, such as one or more displays 20 (Figure 9) which provides the user interface 8 and local storage 37 in the form of a one or more hard disc drives or solid-state drives. The database engine 7 is implemented in software. Computer code 38 for implementing the database engine 7 is stored in storage 37 and loaded into memory 31 for execution by the processor(s) 30. Storage 37 can also hold local copies 39 of objects 9 (Figure 2) from one or more databases 4.

It will be appreciated that many modifications may be made to the embodiments hereinbefore described.

For example, an object 9 (Figure 4) may be downloaded from storage 2 (Figure 1) to the workstation 5 and cached. The database engine 7 may work on a local copy 39 of the object 9 (Figure 4) instead of the object 9 (Figure 4) in storage 2. Downloading may occur when the user 6 needs the object 9 (Figure 4). Updated local copies of the objects may be uploaded from local storage 37 to storage 2 when a user 6 commits to a change.

The pointer 18 in the second object 9₂ (Figure 1) need not point directly to the first object 9₁. The pointer 18 in the second object 9₂ may point to a look up table, such as the reference table 17, which contains a pointer to the first object 9₁.

## Claims

1. A computer-implemented method of linking first and second objects (9₁, 9₂) stored in first and second respective databases (4₁, 4₂) in a group of linked databases storing data objects, wherein the first object is created by a first user (6₁) having read and write access to the first database and read-only access to the second database, and the second object is created by a second user (6₂) having read-only access to the first database and read-and-write access to the second database, the first object comprising a plurality of attributes (10) including a reference (14) identifying the first object (9₁), the method comprising:
receiving from the second user a selection linking the first and second objects;
creating an entry (21₁) for the first object (9₁), in a look up table (17) in the second database (4₂) using the reference, the entry including, as a first reference (22₁) identifying the first object (9₁), the reference, and a second reference (23₁) identifying the second object (9₂),
wherein the look up table is not a centralised look up table, and
wherein the the first object in the first database is not modified to link to the second object in the second database.

2. A method according to claim 1, further comprising setting a pointer (18) in the second object (9₂) to point to the first object (9₁).

3. A computer-implemented method of database querying, the method comprising:
accessing a first object (9₁) stored in a first database (4₁) in group of linked databases storing data objects and at least a look up table created according to the method of claim 1, the first object comprising a plurality of attributes (10) including a reference (14) identifying the first object (9₁);
searching for an entry (21₁) in a look up table (17) in a second, different database (4₂) in the distributed partitioned database system using the reference (14);
in response to finding the entry in the look up table, retrieving a second reference identifying a second object (9₂) from the entry; and
retrieving the second object from the second database;
not using a centralised database.

4. A method of operating a database comprising:
linking first and second objects (9₁, 9₂) stored in first and second respective databases according to claim 1 or 2; and
querying the database according to claim 3.

5. A method according to any preceding claim, further comprising:
downloading, from remote storage, the first and second objects and the look up table;
storing, in local storage (37), the first and second objects and the look up table.

6. A method according to claim 5, when dependent on claim 1 or 2, further comprising:
after setting the pointer (18) in the second object and creating the entry (21₁) in the look up table, uploading, to the remote storage an updated portion of the second object and an updated portion of the look up table.

7. A method according to any preceding claim, wherein the first and second databases (4₁, 4₂) are comprised in a multiple database comprising plural databases arranged hierarchically.

8. A method according to any preceding claim, wherein the first and second objects (9₁, 9₂) correspond to first and second real-world elements and the linking of the first and second objects corresponds to connecting the real-world elements.

9. A method according to claim 8, wherein the first and second objects (9₁, 9₂) correspond to first and second structural elements, equipment elements or pipe elements.

10. A method according to any preceding claim, wherein the plurality of attributes (10) includes a reference (14) identifying the first object (9₁).

11. A method according to any preceding claim, wherein the first object (9₁) comprises an object type (12) for identifying the first object as being of the given object type.

12. A computer program which when executed by a data processing apparatus causes the data processing apparatus to perform a method according to any preceding claim.

13. A computer system for linking first and second objects (9₁, 9₂) stored in first and second databases (4₁, 4₂) respectively in a group of linked databases storing data objects, wherein the first object is created by a first user (6₁) having read and write access to the first database and read-only access to the second database, and the second object is created by a second user (6₂) having read-only access to the first database and read-and-write access to the second database, the first object comprising a plurality of attributes (10) including a reference (14) identifying the first object (9₁), the system comprising:
a module (7) configured to receive from the second user a selection linking the first and second objects and to create an entry (21₁) in a look up table (17) stored in the second database using the reference, the entry including, as a first reference (22₁) identifying the first object (9₁), the reference, and a second reference (23₁) identifying the second object (9₂),
wherein the look up table is not a centralised look up table, and
wherein the the first object in the first database is not modified to link to the second object in the second database.

14. A computer system comprising:
a module (7) configured to access a first object (9₁) stored in a first database (4₁) in a group of linked databases storing data objects and at least a look up table created according to the method of claim 1, the first object comprising a plurality of attributes (10) including a reference (14) identifying the first object (9₁), to search for an entry (21₁) in a look up table (17) in a second, different database in the distributed partitioned database system using the reference (14), in response to finding the entry in the look up table, to retrieve a second reference identifying a second object (9₂) and to retrieve the second object from the second database, and not to use a centralised database.

15. A database system (1) comprising:
a group of linked databases storing data objects and at least a look up table created according to the method of claim 1, including the first and second databases (4₁, 4₂); and
a computer system (5) according to claim 13 and/or claim 14.

## Patentansprüche

1. Computerimplementiertes Verfahren zum Verknüpfen eines ersten und eines zweiten Objekts (9₁, 9₂), die in einer jeweiligen ersten und zweiten Datenbank (4₁, 4₂) in einer Gruppe verknüpfter Datenbanken gespeichert sind, in denen Datenobjekte gespeichert sind,
wobei das erste Objekt von einem ersten Benutzer (6₁) mit Lese- und Schreibzugriff auf die erste Datenbank und Nur-Lese-Zugriff auf die zweite Datenbank erstellt wird und das zweite Objekt von einem zweiten Benutzer (6₂) mit Nur-Lese-Zugriff auf die erste Datenbank und Lese- und Schreibzugriff auf die zweite Datenbank erstellt wird, wobei das erste Objekt eine Vielzahl von Attributen (10) umfasst, die eine Referenz (14) beinhaltet, die das erste Objekt (9₁) identifiziert, wobei das Verfahren Folgendes umfasst:
Empfangen einer Auswahl, die das erste und zweite Objekt verknüpft, von dem zweiten Benutzer;
Erstellen eines Eintrags (21₁) für das erste Objekt (9₁) in einer Nachschlagetabelle (17) in der zweiten Datenbank (4₂) unter Verwendung der Referenz, wobei der Eintrag als eine erste Referenz (22₁), die das erste Objekt (9₁) identifiziert, die Referenz und eine zweite Referenz (23₁) beinhaltet, die das zweite Objekt (9₂) identifiziert, wobei die Nachschlagetabelle keine zentrale Nachschlagetabelle ist und
wobei das erste Objekt in der ersten Datenbank nicht modifiziert wird, um eine Verknüpfung mit dem zweiten Objekt in der zweiten Datenbank herzustellen.

2. Verfahren nach Anspruch 1, ferner umfassend Setzen eines Zeigers (18) in dem zweiten Objekt (9₂), um auf das erste Objekt (9₁) zu zeigen.

3. Computerimplementiertes Verfahren zum Abfragen von Datenbanken, wobei das Verfahren Folgendes umfasst:
Zugreifen auf ein erstes Objekt (9₁), das in einer ersten Datenbank (4₁) in einer Gruppe verknüpfter Datenbanken gespeichert ist, die Datenobjekte und mindestens eine gemäß dem Verfahren nach Anspruch 1 erstellte Nachschlagetabelle speichert,
wobei das erste Objekt eine Vielzahl von Attributen (10) umfasst, die eine Referenz (14) beinhaltet, die das erste Objekt (9₁) identifiziert,
Suchen nach einem Eintrag (21₁) in einer Nachschlagetabelle (17) in einer zweiten, anderen Datenbank (4₂) in dem verteilten partitionierten Datenbanksystem unter Verwendung der Referenz (14);
als Reaktion auf das Auffinden des Eintrags in der Nachschlagetabelle, Abrufen einer zweiten Referenz, die ein zweites Objekt (9₂), aus dem Eintrag identifiziert, und
Abrufen des zweiten Objekts aus der zweiten Datenbank;
Nichtverwenden einer zentralen Datenbank.

4. Verfahren zum Betreiben einer Datenbank, umfassend:
Verknüpfen eines ersten und zweiten Objekts (9₁, 9₂), die in einer jeweiligen ersten und zweiten Datenbank gemäß Anspruch 1 oder 2 gespeichert sind; und
Abfragen der Datenbank nach Anspruch 3.

5. Verfahren nach einem vorhergehenden Anspruch, ferner umfassend:
Herunterladen des ersten und zweiten Objekts und der Nachschlagetabelle aus einem entfernten Speicher;
Speichern des ersten und zweiten Objekts und der Nachschlagetabelle in dem lokalen Speicher (37).

6. Verfahren nach Anspruch 5, sofern abhängig von Anspruch 1 oder 2, ferner umfassend:
nach dem Setzen des Zeigers (18) in dem zweiten Objekt und Erstellen des Eintrags (21₁) in der Nachschlagetabelle, Hochladen eines aktualisierten Abschnitts des zweiten Objekts und eines aktualisierten Abschnitts der Nachschlagetabelle in den entfernten Speicher.

7. Verfahren nach einem der vorhergehenden Ansprüche, wobei die erste und zweite Datenbank (4₁, 4₂) in einer Mehrfachdatenbank enthalten sind, die mehrere hierarchisch angeordnete Datenbanken umfasst.

8. Verfahren nach einem der vorhergehenden Ansprüche, wobei das erste und zweite Objekt (9₁, 9₂) einem ersten und zweiten realen Element entsprechen und das Verknüpfen des ersten und zweiten Objekts einem Verbinden der realen Elemente entspricht.

9. Verfahren nach Anspruch 8, wobei das erste und zweite Objekt (9₁, 9₂) einem ersten und zweiten Strukturelement, Ausrüstungselement oder Rohrelement entsprechen.

10. Verfahren nach einem der vorhergehenden Ansprüche, wobei die Vielzahl von Attributen (10) eine Referenz (14) beinhaltet, die das erste Objekt (9₁) identifiziert.

11. Verfahren nach einem der vorhergehenden Ansprüche, wobei das erste Objekt (9₁) einen Objekttyp (12) zum Identifizieren des ersten Objekts als von dem gegebenen Objekttyp umfasst.

12. Computerprogramm, das bei Ausführung einer Datenverarbeitungsvorrichtung die Datenverarbeitungsvorrichtung dazu veranlasst, ein Verfahren nach einem der vorhergehenden Ansprüche durchzuführen.

13. Computersystem zum Verknüpfen eines ersten und zweiten Objekts (9₁, 9₂), die in einer ersten und zweiten Datenbank (4₁, 4₂) jeweils in einer Gruppe verknüpfter Datenbanken gespeichert sind, in denen Datenobjekte gespeichert sind,
wobei das erste Objekt von einem ersten Benutzer (6₁) mit Lese- und Schreibzugriff auf die erste Datenbank und Nur-Lese-Zugriff auf die zweite Datenbank erstellt wird und das zweite Objekt von einem zweiten Benutzer (6₂) mit Nur-Lese-Zugriff auf die erste Datenbank und Lese- und Schreibzugriff auf die zweite Datenbank erstellt wird, wobei das erste Objekt eine Vielzahl von Attributen (10) umfasst, die eine Referenz (14) beinhaltet, die das erste Objekt (9₁) identifiziert, wobei das Verfahren Folgendes umfasst:
ein Modul (7), das dazu konfiguriert ist, von dem zweiten Benutzer eine Auswahl zu empfangen, die das erste und zweite Objekt verknüpft, und unter Verwendung der Referenz einen Eintrag (21₁) in einer Nachschlagetabelle (17) zu erstellen, die in der zweiten Datenbank gespeichert ist, wobei der Eintrag als erste Referenz (22₁), die das erste Objekt (9₁) identifiziert, die Referenz und eine zweite Referenz (23₁) beinhaltet, die das zweite Objekt (9₂) identifiziert,
wobei die Nachschlagetabelle keine zentrale Nachschlagetabelle ist und
wobei das erste Objekt in der ersten Datenbank nicht modifiziert wird, um eine Verknüpfung mit dem zweiten Objekt in der zweiten Datenbank herzustellen.

14. Computersystem, umfassend:
ein Modul (7), das dazu konfiguriert ist, auf ein erstes Objekt (9₁), das in einer ersten Datenbank (4₁) in einer Gruppe verknüpfter Datenbanken gespeichert ist, die Datenobjekte speichern, und mindestens eine Nachschlagetabelle zuzugreifen, die gemäß dem Verfahren von Anspruch 1 erstellt wurde,
wobei das erste Objekt eine Vielzahl von Attributen (10) umfasst, die eine Referenz (14) beinhaltet, die das erste Objekt (9₁) identifiziert, um unter Verwendung der Referenz (14) nach einem Eintrag (21₁) in einer Nachschlagetabelle (17) in einer zweiten, anderen Datenbank in dem verteilten partitionierten Datenbanksystem zu suchen,
als Reaktion auf ein Auffinden des Eintrags in der Nachschlagetabelle, Abrufen einer zweiten Referenz, die ein zweites Objekt (9₂) identifiziert, und Abrufen des zweiten Objekts aus der zweiten Datenbank und Nichtverwenden einer zentralen Datenbank.

15. Datenbanksystem (1), umfassend:
eine Gruppe verknüpfter Datenbanken, die Datenobjekte und mindestens eine gemäß dem Verfahren nach Anspruch 1 erstellte Nachschlagetabelle speichern, welche die erste und zweite Datenbank (4₁, 4₂) beinhaltet; und
ein Computersystem (5) nach Anspruch 13 und/oder Anspruch 14.

## Revendications

1. Procédé mis en oeuvre par ordinateur permettant la liaison de premier et deuxième objets (9₁, 9₂) stockés dans des première et deuxième bases de données respectives (4₁, 4₂) dans un groupe de bases de données liées stockant des objets de données,
dans lequel le premier obj et est créé par un premier utilisateur (6₁) ayant un accès en lecture et en écriture à la première base de données et un accès en lecture seule à la deuxième base de données, et le deuxième objet est créé par un deuxième utilisateur (6₂) ayant un accès en lecture seule à la première base de données et un accès en lecture et en écriture à la deuxième base de données, le premier objet comprenant une pluralité d'attributs (10) comportant une référence (14) identifiant le premier objet (9₁), le procédé comprenant :
la réception en provenance du deuxième utilisateur d'une sélection liant les premier et deuxième objets ;
la création d'une entrée (21₁) pour le premier objet (9₁) dans une table de consultation (17) dans la deuxième base de données (4₂) utilisant la référence, l'entrée comprenant, en tant que première référence (22₁) l'identification du premier objet (9₁), la référence, et une deuxième référence (23₁) identifiant le deuxième objet (9₂),
dans lequel la table de consultation n'est pas une table de consultation centralisée, et
dans lequel le premier objet dans la première base de données n'est pas modifié pour être lié au deuxième objet dans la deuxième base de données.

2. Procédé selon la revendication 1, comprenant en outre l'établissement d'un pointeur (18) dans le deuxième objet (9₂) pour pointer vers le premier objet (9₁).

3. Procédé mis en oeuvre par ordinateur permettant l'interrogation de base de données, le procédé comprenant :
l'accès à un premier objet (9₁) stocké dans une première base de données (4₁) dans un groupe de bases de données liées stockant des objets de données et à au moins une table de consultation créée selon le procédé de la revendication 1,
le premier objet comprenant une pluralité d'attributs (10) comprenant une référence (14) identifiant le premier objet (9₁) ;
la recherche d'une entrée (21₁) dans une table de consultation (17) dans une deuxième base de données différente (4₂) dans le système distribué de bases de données partitionnées utilisant la référence (14) ;
en réponse à la recherche de l'entrée dans la table de consultation, la récupération d'une deuxième référence identifiant un deuxième objet (9₂) à partir de l'entrée ; et
la récupération du deuxième objet à partir de la deuxième base de données ;
la non-utilisation d'une base de données centralisée.

4. Procédé d'exploitation d'une base de données comprenant :
la liaison de premier et deuxième objets (9₁, 9₂) stockés dans des première et deuxième bases de données respectives selon la revendication 1 ou 2 ; et
l'interrogation de la base de données selon la revendication 3.

5. Procédé selon une quelconque revendication précédente, comprenant en outre :
le téléchargement, à partir d'un stockage distant, des premier et deuxième objets et de la table de consultation ;
le stockage, dans un stockage local (37), des premier et deuxième objets et de la table de consultation.

6. Procédé selon la revendication 5, lorsqu'elle dépend de la revendication 1 ou 2, comprenant en outre :
après l'établissement du pointeur (18) dans le deuxième objet et la création de l'entrée (21₁) dans la table de consultation, le téléchargement vers le stockage distant d'une partie actualisée du deuxième objet et d'une partie actualisée de la table de consultation.

7. Procédé selon l'une quelconque des revendications précédentes, dans lequel les première et deuxième bases de données (4₁, 4₂) sont comprises dans une base de données multiple comprenant plusieurs bases de données agencées hiérarchiquement.

8. Procédé selon l'une quelconque des revendications précédentes, dans lequel les premier et deuxième objets (9₁, 9₂) correspondent à des premier et deuxième éléments du monde réel et la liaison des premier et deuxième objets correspond à la connexion des éléments du monde réel.

9. Procédé selon la revendication 8, dans lequel les premier et deuxième objets (9₁, 9₂) correspondent à des premier et deuxième éléments structurels, éléments d'équipement ou éléments de canalisation.

10. Procédé selon l'une quelconque des revendications précédentes, dans lequel la pluralité d'attributs (10) comprend une référence (14) identifiant le premier objet (9₁).

11. Procédé selon l'une quelconque des revendications précédentes, dans lequel le premier objet (9₁) comprend un type d'objet (12) pour identifier le premier objet comme étant du type d'objet donné.

12. Programme informatique qui, lorsqu'il est exécuté par un appareil de traitement de données, amène l'appareil de traitement de données à exécuter un procédé selon l'une quelconque des revendications précédentes.

13. Système informatique de liaison de premier et deuxième objets (9₁, 9₂) stockés dans des première et deuxième bases de données (4₁, 4₂) respectivement dans un groupe de bases de données liées stockant des objets de données,
dans lequel le premier obj et est créé par un premier utilisateur (6₁) ayant un accès en lecture et en écriture à la première base de données et un accès en lecture seule à la deuxième base de données, et le deuxième objet est créé par un deuxième utilisateur (6₂) différent ayant un accès en lecture seule à la première base de données et un accès en lecture et en écriture à la deuxième base de données, le premier objet comprenant une pluralité d'attributs (10) comprenant une référence (14) identifiant le premier objet (9₁), le système comprenant :
un module (7) configuré pour recevoir en provenance du deuxième utilisateur une sélection liant les premier et deuxième objets et pour créer une entrée (21₁) dans une table de consultation (17) stockée dans la deuxième base de données utilisant la référence, l'entrée comprenant, en tant que première référence (22₁) identifiant le premier objet (9₁), la référence, et une deuxième référence (23₁) identifiant le deuxième objet (9₂),
dans lequel la table de consultation n'est pas une table de consultation centralisée et dans lequel le premier objet dans la première base de données n'est pas modifié pour être lié au deuxième objet dans la deuxième base de données.

14. Système informatique comprenant :
un module (7) configuré pour accéder à un premier objet (9₁) stocké dans une première base de données (4₁) dans un groupe de bases de données liées stockant des objets de données et au moins une table de consultation créée selon le procédé de la revendication 1,
le premier objet comprenant une pluralité d'attributs (10) comprenant une référence (14) identifiant le premier objet (9₁), pour rechercher une entrée (21₁) dans une table de consultation (17) dans une deuxième base de données différente dans le système distribué de base de données partitionnées utilisant la référence (14),
en réponse à la découverte de l'entrée dans la table de consultation, la récupération d'une deuxième référence identifiant un deuxième objet (9₂) et la récupération du deuxième objet de la deuxième base de données, et la non-utilisation d'une base de données centralisée.

15. Système de base de données (1) comprenant :
un groupe de bases de données liées stockant des objets de données et au moins une table de consultation créée selon le procédé de la revendication 1, comprenant les première et deuxième bases de données (4₁, 4₂) ; et
un système informatique (5) selon la revendication 13 et/ou la revendication 14.
